## Europäisches Patentamt
## European Patent Office
## Office européen des brevets

(19)

(11) Veröffentlichungsnummer: **0 216 210**
**B1**

(12) ## EUROPÄISCHE PATENTSCHRIFT

(45) Veröffentlichungstag der Patentschrift:
**19.04.89**

(21) Anmeldenummer: **86112149.9**

(22) Anmeldetag: **02.09.86**

(51) Int. Cl.⁴: **C 08 F 210/02,** C 08 F 218/04 //
(C08F210/02, 220:10, 218:04,
220:04),(C08F218/04, 210:02,
220:10, 220:04)

(54) **Wärmefester Haftklebestoff.**

(30) Priorität: **04.09.85 DE 3531601**

(43) Veröffentlichungstag der Anmeldung:
**01.04.87 Patentblatt 87/14**

(45) Bekanntmachung des Hinweises auf die Patenterteilung:
**19.04.89 Patentblatt 89/16**

(84) Benannte Vertragsstaaten:
**AT BE CH DE FR GB IT LI NL SE**

(56) Entgegenhaltungen:
**EP-A-0 006 438**
**FR-A-2 377 426**
**GB-A-1 265 173**

(73) Patentinhaber: **WACKER- CHEMIE GMBH,
Prinzregentenstrasse 22, D-8000 München 22 (DE)**

(72) Erfinder: **Weissgerber, Rudolf, Dr., Karl- Gros-
Strasse 9, D-8263 Burghausen (DE)**
Erfinder: **Ball, Peter, Dr., Kettelerstrasse 11, D-8261
Emmerting (DE)**
Erfinder: **Marquardt, Klaus, Dr., Lindacherstrasse
77, D-8263 Burghausen (DE)**
Erfinder: **Selig, Manfred, Dr., Regerstrasse 85,
D-8263 Burghausen (DE)**
Erfinder: **Stallbauer, Fritz, Stegerwaldstrasse 9,
D-8263 Burghausen (DE)**

EP 0 216 210 B1

**Beschreibung**

Aus der EP-B-17 986 (und der entsprechenden US-A-4 322 516) sind Haftkleber bekannt, die auf wäßrigen Dispersionen eines Copolymerisats aus Ethylen, Acrylsäureestern von Alkoholen mit 4 bis 12 C-Atomen, Vinylacetat, gegebenenfalls substituiertem (Meth-)Acrylamid, sowie gegebenenfalls weiteren olefinisch ungesättigten und mit Wasser in beliebigem Verhältnis mischbaren oder monomerlöslichen oder mehrfach olefinisch ungesättigten Monomeren basieren, wobei die Glasübergangstemperatur des Copolymerisats im Bereich von -20 bis -60°C und der K-Wert nach Fikentscher, gemessen in Tetrahydrofuran, im Bereich von 50 bis 180 liegen soll.

Diese bekannten Haftkleber besitzen eine ausgezeichnete Kohäsion, jedoch läßt die Adhäsion und Klebrigkeit auf einigen Substraten, z. B. Glas und ähnlichen Untergründen, insbesondere bei Erhöhung der Temperatur vielfach noch zu wünschen übrig.

Es galt daher, bei Aufrechterhaltung des übrigen vorteilhaften Eigenschaftsbildes dieser bekannten Kleber, eine Haftkleberdispersion zu finden oder auszuwählen, deren resultierender Haftkleberfilm zudem noch auch bei erhöhter Temperatur, z. B. bis 100°C, insbesondere bis 60°C, eine sehr gute oder gar ausgezeichnete Adhäsion zu einer Vielzahl von Untergründen, z. B. Glas und ähnlichen Substraten aufweist.

Gegenstand der Erfindung ist daher eine wäßrige Haftkleberdispersion, enthaltend, bezogen auf das Gesamtgewicht der Dispersion, 40 bis 65 Gewichtsprozent eines Copolymerisats, welches durch radikalische Copolymerisation von Ethylen, Vinylestern von gesättigten $C_2$- bis $C_{12}$-Carbonsäuren, ethylenisch ungesättigten Carbonsäuren, ethylenisch ungesättigten hydroxyalkylfunktionellen Verbindungen, gegebenenfalls (Meth-) Acrylestern mit $C_4$- bis $C_{12}$-Alkylgruppen und gegebenenfalls weiteren einfach oder mehrfach ethylenisch ungesättigten Verbindungen nach dem Emulsionspolymerisationsverfahren erhältlich ist und eine Glasübergangstemperatur und einen K-Wert in den oben genannten Bereichen besitzt.

Das in der erfindungsgemäßen Haftkleberdispersion enthaltene Copolymerisat ist dadurch gekennzeichnet, daß es erhältlich ist durch Emulsionspolymerisation von

a) 10 - 45   Gew.-% Ethylen
b)  0 - 25   Gew.-% Acrylester(n)
c) 40 - 89   Gew.-% Vinylester(n)
d) 0,5- 4    Gew.-% ethylenisch ungesättigten Carbonsäuren mit 3 - 4 C-Atomen
e) 0,5- 10   Gew.-% ethylenisch ungesättigten hydroxyalkylfunktionellen Verbindungen
f)  0 - 10   Gew.-% weiteren einfach oder mehrfach ethylenisch ungesättigten Verbindungen

in Gegenwart von 1 - 6 Gew.- % bezogen auf das Comonomerengemisch an üblichen Emulgatoren.

Hergestellt werden die Copolymerisate bzw. die erfindungsgemäße Haftkleberdispersion durch radikalische Polymerisation des Comonomerengemisches der Komponenten b - f in den angegebenen Mengen unter einem Ethylendruck von vorzugsweise 20 bis 100 bar bei vorzugsweise 30 bis 80°C in einem Druckgefäß in Anwesenheit von 1 - 6 Gew.-%, bezogen auf das Comonomerengemisch, an Emulgatoren.

Als Komponente b ) sind die Acrylester von Alkoholen mit 4 bis 12 Kohlenstoffatomen geeignet. Bevorzugt werden n-Butylacrylat und/oder 2-Ethylhexylacrylat eingesetzt. Die verwendeten Gewichtsmengen (jeweils bezogen auf Gesamtgewicht des Monomerengemisches und sich insgesamt jeweils zu 100 Gew.-% ergänzend) liegen bei 0 bis 25 Gew.-% vorzugsweise bei 0 bis 15 Gew.-%.

Die Vinylester die Komponente c), werden in Mengen von 40 bis 89 Gew.-% einpolymerisiert, vorzugsweise in Mengen von 55 bis 80 Gew.-%. Als Beispiele sind zu nennen: Vinylacetat, -propionat, -laurat und Vinylester der Versatic®-Säuren, insbesondere mit 10 C-Atomen (Shell AG).

Die in Mengen von 0,5 bis 4 Gew.-% eingesetzte Komponente d) besteht aus ethylenisch ungesättigten Carbonsäuren mit 3 - 4 C-Atomen, vorzugsweise α,β-ungesättigten Carbonsäuren, insbesondere Acrylsäure und/oder Methacrylsäure, besonders vorzugsweise Acrylsäure.

Die gestellte Aufgabe, einen wärmefesten Haftkleber zur Verfügung zu stellen wird überraschenderweise dadurch gelöst, daß in dem Copolymerisat in Kombination mit den Monomereinheiten der anderen Komponenten und in den engen Mengenverhältnissen Einheiten enthalten sind, die auf ethylenisch ungesättigte hydroxyalkylfunktionelle Verbindungen zurückgehen. Diese Komponente e), insbesondere 2-Hydroxyethylacrylat, 2-Hydroxypropylacrylat und 6-Hydroxycapronsäureallylester, sind bei der Herstellung der Dispersion in Mengen von 0,5 bis 10 Gew.-% eingesetzt, vorzugsweise in Mengen von 1 bis 6 Gew.-%.

Als Komponente f) sind insbesondere zu nennen ethylenisch ungesättigte Sulfate und/oder Sulfonate, insbesondere Alkalisalze der Vinylsulfonsäure, des weiteren mehrfach ungesättigte Verbindungen, insbesondere Divinyladipat (bis zu 1 Gew.-% auf Gesamtmonomere). Eingesetzt werden können auch weitere monomerlösliche Comonomere wie Vinylether, Vinylpyrrolidon usw. (bis zu 8,5 Gew.-% auf Gesamtmonomere). Bevorzugt werden nur die wasserlöslichen Comonomeren, die der Stabilisierung der Dispersion dienen und vorzugsweise nur in möglichst geringen Mengen eingesetzt werden. Beispielsweise kann Acrylamid und/oder Methacrylamid nur in Mengen von insgesamt 0 bis 0,5 Gew.-% vorzugsweise bis 0,3 Gew.-% vorgelegt werden.

Die Polymerisation wird in üblichen Druckgefäßen durchgeführt. Bevorzugt wird ein Teil der Comonomeren zumindest teilweise verzögert dosiert. z. B. werden vorzugsweise mindestens 30 Gew.-% der Komponente c) erst während der Polymerisationsreaktion zudosiert. Die Komponenten b) und e) können vollständig vorgelegt, vollständig dosiert oder teilweise dosiert werden. Die Komponente d) kann ebenfalls vollständig vorgelegt oder dosiert werden. In einer bevorzugten Ausführungsform wird sie im Gewichtsverhältnis 1 : 5 bis 5 : 1 zwischen Monomervorlage und Monomerdosierung verteilt. Während die wasserlöslichen Anteile der Komponente f) vorzugsweise vorgelegt werden, werden alle anderen Monomeren vorzugsweise vollständig dosiert, da dadurch zudem Rheologie und Stabilität der Dispersion besonders vorteilhaft beeinflußt werden.

Alle Dosierungen erfolgen vorzugsweise im Maße des Verbrauchs der jeweiligen Komponente.

Der zu Beginn der Polymerisation eingestellte Ethylendruck kann über die gesamte Reaktionsdauer z. B. durch Nachdrücken von Ethylen konstant gehalten werden. Es ist aber auch möglich, die anfangs in den Reaktor eingebrachte Ethylenmenge nicht zu ergänzen oder den Ethylendruck innerhalb der genannten Grenzen während der Polymerisation zu variieren. Vorzugsweise wird vor Beginn der Polymerisation ein bestimmter Ethylendruck eingestellt und während der Reaktion konstant gehalten. Anschließend kann noch in üblicher Weise nachpolymerisiert werden.

Die Polymerisation wird unter Initiierung mittels üblicher wasserlöslicher Radikalbildner durchgeführt die vorzugsweise in Mengen von 0,03 bis 3 Gew.-%, bezogen auf Gesamtgewicht der Comonomeren eingesetzt werden. Es sind insbesondere Persulfate, Hydroperoxide und Perphosphate zu nennen z. B. Ammonium- und Kaliumpersulfat sowie tert.-Butylhydroperoxid. Bevorzugt wird hierbei die Aktivierung der Radikalbildner durch Reduktionsmittel, insbesondere Formaldehydsulfoxylat, wobei vorzugsweise eine oder beide Redox-Katalysatorkomponenten während der Polymerisation dosiert werden.

Durchgeführt wird die Polymerisationsreaktion bei einem pH-Wert von vorzugsweise 3 bis 5 in Gegenwart von üblichen Emulgatoren, insbesondere von Alkyl- und Alkarylethoxylaten, die gegebenenfalls zusätzlich eine Sulfat- Phosphat-, Succinat- oder Sulfonatgruppe besitzen, und vorzugsweise in Mengen von 2 bis 5 Gew.-% eingesetzt werden. Die Emulgatoren können entweder vorgelegt oder aber zumindest teilweise dosiert werden. Zur Regelung des pH-Wertes können Säuren, z. B. Ameisensäure, Essigsäure, Salzsäure, Schwefelsäure, oder Basen, z. B. Ammoniak, Amine, Natronlauge, Kalilauge, Calciumhydroxyd, oder übliche Puffersalze, z. B. Alkaliacetate, Alkalicarbonate, Alkaliphosphate zugegeben werden.

Zur Regelung des Molekulargewichts können bei der Polymerisation bekannte Regler, z. B. Merkaptane, Aldehyde oder Chlorkohlenwasserstoffe, zugesetzt werden.

Hinsichtlich der Anwendung und gegebenenfalls Konfektionierung der erfindungsgemäßen Haftkleberdispersionen kann auf die EP-B-17 986 verwiesen werden.

## Prüfmethoden:

In der folgenden Meßwerttabelle werden die Ergebnisse der Prüfungen von Wärmeschälstandfestigkeit; Oberflächenklebrigkeit, Schälfestigkeit (Klebkraft) und Scherstandfestigkeit von mit den erfindungsgemäßen Dispersionen hergestellten haftklebenden Beschichtungen angegeben. Mit dem Ausdruck "Klebestreifen" werden Streifen aus flexiblem, folienartigen Trägermaterial, beschichtet mit einem Film aus einer erfindungsgemäßen Dispersion verstanden.

Es kamen folgende Bestimmungsmethoden zur Anwendung:

a) Wärmeschälstandfestigkeit:
Ein 5 x 8 cm² großer Klebestreifen wurde mit einer Fläche von 5 x 5 cm² auf eine Kristallglasplatte aufgelegt und mit einer 2,2 kg schweren mit Silicongummi überzogenen Stahlwalze durch zweimaliges Hin- und Herrollen angepreßt. Das Aufkleben erfolgte so daß das freie Ende des Klebestreifens an einer Längsseite der Glasplatte überstand. Man befestigte sofort ein Gewicht von 50 g am freien Ende des Klebestreifens und fixierte die Glasplatte mit dem aufgeklebten Klebestreifen auf der Unterseite in einem auf 50°C vorgewärmten Trockenschrank auf eine Weise, daß sich zwischen verklebtem und freiem Ende des Klebestreifens ein Winkel von 90°C einstellte. Die Befestigung des Gewichtes war so ausgebildet daß die Kraft gleichmäßig über die gesamte Breite des Klebestreifens wirkte. Man stellte die Zeit fest, in der der Klebestreifen bei 50°C unter der konstanten Belastung von 50 g auf einer Strecke von 1 cm abgeschält wurde. Dazu wurde nach einer angemessenen Prüfzeit die geschälte Strecke ausgemessen und der Quotient aus Prüfzeit in Minuten und Schälstrecke in Zentimeter gebildet. Die angegebenen Werte sind Mittelwerte aus jeweils drei Einzelmessungen.

b) Oberflächenklebrigkeit:
Ein 20 cm langer und 2,5 cm breiter Klebestreifen (Trägermaterial: polymerweichmacherhaltiges PVC 0,1 mm dick) wurde in Form einer "Schlaufe" senkrecht hängend mit der Klebstoffschicht nach außen in den oberen Backen einer Zugprüfmaschine eingespannt. Anschließend wurde die "Schlaufe" durch Zusammenfahren der beiden Backen der Zugprüfmaschine senkrecht mit einer Geschwindigkeit von 100 mm/Minute auf eine waagrecht befestigte, sorgfältig gereinigte Glasplatte ohne Druckanwendung in einer Länge von etwa 3 cm aufgelegt. Danach erfolgte sofort mit gleicher Geschwindigkeit der Abzug des Klebestreifens von der Glasoberfläche. Die höchste für das Abziehen der "Schlaufe" benötigte Kraft wird als Maß für die Oberflächenklebrigkeit hergenommen.

Der angegebene Wert ist der Mittelwert aus fünf Einzelmessungen, wobei jedesmal ein frischer Klebestreifen und eine frische Glasoberfläche verwendet wurden.

c) Schälfestigkeit (Klebkraft):

Ein 20 cm langer und 2,5 cm breiter Klebestreifen wurde von einem Ende ausgehend in einer Länge von ca. 12 cm auf eine sorgfältig gereinigte Kristallglasplatte blasenfrei aufgelegt.

Durch 5-maliges Walzen (hin und her) mit einer 2,2 kg schweren, mit Silicongummi überzogenen Stahlwalze wurde der Klebestreifen angedrückt. Nach 8-minütiger bzw. 24-stündiger Lagerung im Klimaraum bei 23°C und 50 % relativer Luftfeuchtigkeit wurde der Klebestreifen mit einer Geschwindigkeit von 300 mm/Minute im 180°-Winkel über eine Länge von 5 cm abgezogen. Die dazu benötigte durchschnittliche Kraft wurde gemessen. Die angegebenen Werte sind Mittelwerte aus jeweils 5 Einzelmessungen.

Die geprüften Klebstoffdispersionen wurden für alle Messungen mit einem Rakel in einer solchen Dicke auf die Trägerfolien aufgezogen, daß nach dem Trocknen eine gleichmäßige Polymerisatschicht von 24 bis 26 g/m$^2$ zurückblieb.

Die Reinigung der bei den Untersuchungen benutzten Glasoberflächen erfolgte durch mechanisches Entfernen von sichtbaren Verschmutzungen mit Hilfe von Wasser und gegebenenfalls Reinigungsmitteln und anschließender Lagerung in einem Aceton-Bad. Vor der Benutzung der so gereinigten Testoberflächen wurden die Platten mindestens 48 Stunden im Normklima 23°C/50 % rel. Luftfeuchtigkeit gelagert.

In den folgenden Beispielen beziehen sich alle %-Angaben, sofern nicht anders angegeben, auf das Gewicht.

Die mit Buchstaben bezeichneten Beispiele sind Vergleichsversuche.

**Beispiel A**

In einem 16-l-Rührautoklaven wurden 5,200 g Wasser 97 g des Natriumsalzes eines sulfatierten Nonylphenolpolyglykolethers mit ca. 25 Glykoleinheiten, 48 g eines Alkylsulfonats mit ca. 15 C-Atomen, 21 g Acrylamid und 70 g Acrylsäure vorgelegt und 2160 g Vinylacetat, 840 g Vinyllaurat und 400 g 2-Ethylhexylacrylat einemulgiert. Es wurde auf 50°C aufgeheizt und bis 60 bar mit Ethylen gesättigt.

Polymerisationsstart erfolgte durch gleichzeitige Dosierung von jeweils 80 ml/h an 10-%-iger Ammoniumpersulfatlösung und 5-%-iger Na-formaldehydsulfoxylatlösung, und die Polymerisationsweiterführung durch gleichzeitige Dosierung von jeweils 40 ml/h der beiden Lösungen.

Nachdem der Start erfolgt war (erkenntlich an einem Druckanstieg von ca. 2 bar) wurden während 8 h eine Mischung von 2280 g Vinylacetat und 600 g Vinyllaurat sowie eine Lösung von 285 g des obigen Nonylphenolpolyglykolethersulfats, 120 g Acrylsäure und 18 g konzentrierte Ammoniaklösung in 530 g Wasser zudosiert. Nach ca. 2 h war der Ethylendruck auf 60 bar gefallen und zur weiteren Aufrechterhaltung dieses Druckes mußte ständig Ethylen nachgedrückt werden.

Nach Dosierende von Monomergemisch und Emulgatorlösung wurde der Ethylendruck noch weitere 1,5 h und die Dosierung der Initiatorlösungen noch weitere 6 h aufrecht erhalten. Der Ethylendruck fiel dabei auf 25 bar.

Nach Abkühlen und Entspannen resultierte eine Dispersion mit 56,6 % Feststoffgehalt, einer Viskosität von 450 mPa·s (Epprecht Rheometer STV, C III) einem K-Wert von 84 (nach Fikentscher, Cellulosechemie Band 13 58, (1932); gemessen in 1-%-iger Tetrahydrofuranlösung) und einem Ethylengehalt des Feststoffanteils von 32 %.

**Beispiel 1**

Beispiel A wurde mit der Abänderung wiederholt, daß der Monomerdosierlösung 200 g 2-Hydroxyethylacrylat zugefügt wurden.

Es resultierte eine Dispersion mit 57,4 % Feststoffgehalt einer Viskosität von 700 mPa·s (s. Bsp. 1), einem K-Wert von 90,5 und 32,5 % Ethylen im Feststoffanteil.

**Beispiel 2**

Beispiel A wurde mit der Abänderung wiederholt, daß der Monomerdosierlösung 400 g 2-Hydroxyethylacrylat zugegeben wurden.

Es resultierte eine Dispersion mit 56,7 % Feststoffanteil einer Viskosität von 630 mPa·s, einem K-Wert von 94 und 30,5 % Ethylen im Feststoffanteil.

**Beispiel B**

Beispiel 2 wurde wiederholt, aber die Acrylamidmenge in der Polymerisationsvorlage wurde von 21 g auf 84 g erhöht. Es resultierte eine Dispersion mit 55,7 % Feststoffgehalt einer Viskosität von 1090 mPa·s, einem K-Wert von 84 und 29,5 % Ethylen im Feststoffanteil.

**Tabelle 1**

Prüfwerte von Dispersionsbeschichtungen mit ca. 25 μ Trockenfilmstärke auf 100 μ starken Weich-PVC-Folien

| Dispersion Beispiel Nr Beispiel Nr. | Wärmeschälstandfestigkeit (Minuten/cm) bei 50°C | Obeflächen-klebrigkeit (N/2,5 cm) | Schälfestigkeit (N/2,5 cm) auf Glas nach einer Verklebungszeit von | |
|---|---|---|---|---|
| | | | 8 Min. | 24 Std. |
| A | 282 | 9,0 | 9,6 | 11,1 |
| 1 | 1234 | 8,7 | 10,2 | 14,0 |
| 2 | 8200 | 8,3 | 8,7 | 18,1 |
| B | 48 | 4,7 | 9,0 | 15,6 |

**Patentansprüche**

1. Wäßrige Haftkleberdispersion, enthaltend, bezogen auf das Gesamtgewicht der Dispersion, 40 bis 65 Gewichtsprozent eines Copolymerisats, welches durch radikalische Copolymerisation von Ethylen, Vinylestern gesättigter $C_2$- bis $C_{12}$-Carbonsäuren, ethylenisch ungesättigten Carbonsäuren, ethylenisch ungesättigten hydroxyalkylfunktionellen Verbindungen, gegebenenfalls (Meth-)Acrylestern mit $C_4$- bis $C_{12}$-Alkylgruppen und gegebenenfalls weiteren einfach bis mehrfach ethylenisch ungesättigten Verbindungen nach dem Emulsionspolymerisationsverfahren erhältlich ist und eine Glasübergangstemperatur im Bereich von -20 bis -60°C und einen K-Wert nach Fikentscher, gemessen in Tetrahydrofuran, im Bereich von 50 bis 180 besitzt, dadurch gekennzeichnet, daß es erhältlich ist durch Emulsionspolymerisation von

a) 10 - 45  Gew.-% Ethylen
b)  0 - 25  Gew.-% Acrylester(n)
c) 40 - 89  Gew.-% Vinylester(n)
d) 0,5 - 4  Gew.-% ethylenisch ungesättigten Carbonsäuren mit 3 - 4 C-Atomen
e) 0,5 - 10  Gew.-% ethylenisch ungesättigten hydroxyalkylfunktionellen Verbindungen
f)  0 - 10  Gew.-% weiteren einfach oder mehrfach ethylenisch ungesättigten Verbindungen

in Gegenwart von 1 - 6 Gew.-% bezogen auf das Comonomerengemisch an üblichen Emulgatoren.

2. Wäßrige Haftkleberdispersion nach Anspruch 1, dadurch gekennzeichnet, daß als Acrylester gegebenenfalls n-Butyl- und/oder 2-Ethylhexylacrylat einpolymerisiert sind.

3. Wäßrige Haftkleberdispersion nach Anspruch 1 oder 2, dadurch gekennzeichnet, daß als ethylenisch ungesättigte Carbonsäuren Acrylsäure und/oder Methacrylsäure einpolymerisiert sind.

4. Wäßrige Haftkleberdispersion nach einem der Ansprüche 1 bis 3, dadurch gekennzeichnet, daß als hydroxyalkylfunktionelle Verbindungen 2-Hydroxyethyl- und/oder 2-Hydroxypropylacrylat einpolymerisiert sind.

5. Verfahren zur Herstellung der wäßrigen Haftkleberdispersion nach einem der Ansprüche 1 bis 4, dadurch gekennzeichnet, daß die Comonomeren b - f unter einem Ethylendruck von 20 bis 100 bar bei einer Temperatur von 30 bis 80°C in Anwesenheit von 1 bis 6 Gew.-%, bezogen auf das Gesamtgewicht der Comonomeren, an Emulgatoren radikalisch polymerisiert werden.

6. Verfahren nach Anspruch 5, dadurch gekennzeichnet, daß die ungesättigte(n) Carbonsäure(n) auf Polymerisationsvorlage und Monomerdosierung in Gewichtsverhältnis von 1 : 5 bis 5 : 1 verteilt ist (sind).

7. Verfahren nach Anspruch 5, dadurch gekennzeichnet, daß die hydroxyalkylfunktionellen Verbindungen vollständig dosiert werden.

**Claims**

1. Aqueous contact adhesive dispersion containing, relative to the total weight of the dispersion, 40 to 65 percent by weight of a copolymer which can be obtained by free-radical copolymerization of ethylene, vinyl esters of saturated $C_2$- to $C_{12}$-carboxylic acids, ethylenically unsaturated carboxylic acids, ethylenically unsaturated hydroxyalkyl-functional compounds, if appropriate (meth)-acrylates containing $C_4$- to $C_{12}$-alkyl groups and if appropriate further ethylenically mono- or polyunsaturated compounds by the emulsion polymerization process, and which has a glass transition temperature in the range -20 to -60°C and a Fikentscher K value, measured in tetrahydrofuran, in the range 50 to 180, characterized in that it is obtainable by emulsion polymerization of

a) 10 - 45 %   by weight of ethylene
b)  0 - 25 %   by weight of acrylate(s)
c) 40 - 89 %   by weight of vinyl ester(s)
d) 0.5- 4 %    by weight of ethylenically unsaturated carboxylic acids having 3 - 4 C atoms
e) 0.5- 10 %   by weight of ethylenically unsaturated hydroxyalkyl-functional compounds
f)  0 - 10 %   by weight of further ethylenically mono- or polyunsaturated compounds

in the presence of 1 - 6 % by weight relative to the comonomer mixture, of customary emulsifiers.

2. Aqueous contact adhesive dispersion according to Claim 1, characterized in that the acrylates optionally copolymerized are n-butyl acrylate and/or 2-ethylhexyl acrylate.

3. Aqueous contact adhesive dispersion according to Claim 1 or 2, characterized in that the ethylenically unsaturated carboxylic acids copolymerized are acrylic acid and/or methacrylic acid.

4. Aqueous contact adhesive dispersion according to one of Claims 1 to 3, characterized in that the hydroxyalkyl-functional compounds copolymerized are 2-hydroxyethyl acrylate and/or 2-hydroxypropyl acrylate.

5. Process for the production of the aqueous contact adhesive dispersion according to one of Claims 1 to 4, characterized in that the comonomers b - f are polymerized by means of free radicals under an ethylene pressure from 20 to 100 bar at a temperature from 30 to 80°C in the presence of 1 to 6 % by weight, relative to the total weight of the comonomers, of emulsifiers.

6. Process according to Claim 5, characterized in that the unsaturated carboxylic acid(s) is (are) distributed between the polymerization mixture initially introduced and the metering in of the monomers in a weight ratio from 1 : 5 to 5 : 1.

7. Process according to Claim 5, characterized in that the hydroxyalkyl-functional compounds are metered in in their entirety.

**Revendications**

1. Dispersion aqueuse d'un adhésif de contact contenant, par rapport au poids total de la dispersion, 40 à 65 % en poids d'un copolymère pouvant être préparé par copolymérisation radicalaire d'éthylène, d'esters vinyliques d'acides carboxyliques saturés en $C_2$ à $C_{12}$, d'acides carboxyliques à insaturation éthylénique, de composés hydroxyalkyl-fonctionnels à insaturation éthylénique, éventuellement d'esters (méth)-acryliques comportant des groupes alkyle en $C_4$ à $C_{12}$, et éventuellement d'autres composés à une ou plusieurs insaturations éthyléniques, par le procédé de polymérisation en émulsion, et présentant une température de transition vitreuse comprise entre -20 et -60°C et une valeur K selon Fikentscher, mesurée dans le tétrahydrofuranne, comprise entre 50 et 180, caractérisée en ce qu'on peut l'obtenir par une polymérisation en émulsion des composés suivants:

a) 10 - 45 %    en poids d'éthylène
b)  0 - 25 %    en poids d'ester(s) acrylique(s)
c) 40 - 89 %    en poids d'ester(s) vinylique(s)
d) 0,5 - 4 %    en poids d'acides carboxyliques à insaturation éthylénique ayant 3 - 4 atomes de carbone
e) 0,5 - 10 %   en poids de composés hydroxyalkyl-fonctionnels à insaturation éthylénique
f)  0 - 10 %    en poids d'autres composés à une ou plusieurs insaturations éthyléniques,

en présence de 1 - 6 % en poids, par rapport au mélange de comonomères, des agents émulsionnants habituels.

2. Dispersion aqueuse d'un adhésif de contact selon la revendication 1, caractérisée en ce que l'ester acrylique polymérisé est éventuellement l'acrylate de n-butyle et/ou d'éthyl-2 hexyle.

3. Dispersion aqueuse d'un adhésif de contact selon les revendications 1 ou 2, caractérisée en ce que les acides carboxyliques à insaturation éthylénique polymérisés sont l'acide acrylique et/ou l'acide méthacrylique.

4. Dispersion aqueuse d'un adhésif de contact selon l'une des revendications 1 à 3, caractérisée en ce que les composés hydroxyalkyl-fonctionnels polymérisés sont l'acrylate d'hydroxy-2 éthyle et/ou l'acrylate d'hydroxy-2 propyle.

5. Procédé pour la préparation de la dispersion aqueuse d'un adhésif de contact selon l'une des revendications 1 à 4, caractérisé en ce que les comonomères b - f sont polymérisés par polymérisation radicalaire sous une pression d'éthylène de 20 à 100 bar, à une température de 30 à 80°C, en présence de 1 à 6 % en poids, par rapport au poids total des comonomères, d'agents émulsionnants.

6. Procédé selon la revendication 5, caractérisé en ce que le ou les acides carboxyliques insaturés sont répartis, entre la masse de polymérisation en place et les monomères ajoutés, selon une proportion pondérale comprise entre 1 : 5 et 5 : 1.

7. Procédé selon la revendication 5, caractérisé en ce que la totalité des composés hydroxyalkyl-fonctionnels est ajoutée après-coup.